# EUROPÄISCHE PATENTSCHRIFT

(11) **EP 2 184 418 B1**
(45) Veröffentlichungstag und Bekanntmachung des Hinweises auf die Patenterteilung: **20.06.2012**
(21) Anmeldenummer: 09175361.6
(22) Anmeldetag: 09.11.2009
(51) Int. Cl.: E04D 1/30

(54) **Halterungsanordnung für die Aufdachmontage eines Photovoltaikmoduls**
Attachment for a photovoltaic panel to a roof covering
Montage d'un module photovoltaic dans une toiture

(30) Priorität: 10.11.2008 DE 102008056556
(43) Veröffentlichungstag der Anmeldung: 12.05.2010
(73) Patentinhaber: Solvis GmbH & Co. KG, 38112 Braunschweig (DE)
(72) Erfinder: Hesse, Gunther, Dipl.-Ing., 38118 Braunschweig (DE)
(74) Vertreter: Einsel, Martin

(56) Entgegenhaltungen:
- CH-A5- 652 161

## Beschreibung

Die Erfindung betrifft eine Halterungsanordnung für eine Aufdachmontage von zu befestigenden Elementen auf einem Dach, welches Dachunterkonstruktionselemente aufweist und mit einem Verbund aus Dacheindeckungselementen gedeckt ist, mit einem Ersatzelement für eines der Dacheindeckungselemente des Verbundes, welches Ersatzelement dafür ausgestaltet ist, anstelle eines der Dacheindeckungselemente in den Verbund eingesetzt zu werden, mit einer oder mehreren Durchführungsöffnungen in dem Ersatzelement, mit Befestigungsmitteln, die an den Dachunterkonstruktionselementen befestigbar sind, mit Verbindungsmitteln, die mit den Befestigungsmitteln verbunden oder verbindbar sind und die durch die Durchführungsöffnungen durchführbar sind, und mit Haltemitteln zum Halten der zu befestigenden Elemente auf dem Dach.

Es wird zunehmend wichtig, Möglichkeiten vorzusehen, insbesondere nachträglich auf Schrägdächern von Häusern Elemente zu montieren. Es kann sich dabei zum Beispiel um Solarkollektoren für eine solarenergieunterstützte Heizungsanlage eines Hauses handeln, ebenso aber auch um Fotovoltaikelemente und dergleichen.

Die Schrägdächer besitzen üblicherweise eine tragende Konstruktion aus Dachunterkonstruktionselementen, also Dachsparren, Pfetten, Dachlattung und dergleichen, meist aus Holz bestehend. Diese Dachunterkonstruktionselemente sind dann mit Dacheindeckungselementen abgedeckt, im Regelfall mit Dachziegeln oder Dachpfannen, die einander überlappen und für den Schutz des Gebäudes gegen Regen und Witterung sorgen. Die Dacheindeckungselemente bilden also einen Verbund miteinander. Es ist natürlich wichtig, dass diese Dacheindeckungselemente unbeschädigt bleiben, um ihrer Aufgabe nachkommen zu können.

Dies führt zu Problemen, wenn man nachträglich solarthermische Kollektoren oder Fotovoltaikelemente aufbringen möchte, da für diese Elemente eine Befestigung am Dach gefunden werden muss.

Hierzu werden in bekannten Konzeptionen Haltewinkel auf die Dachunterkonstruktionselemente aufgebracht, die entsprechend um die Kanten der Dachziegel in dem Verbund herumgeführt und zwischen den Ziegeln hindurchgeführt werden müssen, um eine Beschädigung der Ziegel zu vermeiden und trotzdem die Elemente tragen zu können. Besonders wichtig ist es, dass durch derartige Aufdachhalter für Fotovoltaik oder auch solarthermische Kollektoren keine Beschädigung von beispielsweise Dachziegeln oder anderen Dacheindeckungselementen in ihrer Wasser führenden Schicht erfolgt. Bekannt sind solche Anordnungen beispielsweise aus der DE 20 2004 019 952 U1 oder der DE 20 2006 009 674 U1. Weiter zeigt CH 652 161 A5 eine Halterungsanordnung entsprechend dem Oberbegiff des Anspruch 1.

Insbesondere bei hohen Schneelasten auf den Fotovoltaikelementen oder den Solarkollektoren werden diese Haltewinkel oder sonstigen Halterungselemente mit erheblichen Gewichtskräften belastet und stützen sich dann auf den jeweils darunter liegenden Dachpfannen oder Dachziegeln ab. Dabei führen sie die Gewichtslasten um die Kante der Dachziegel herum.

Das kann bei sehr hohen Schneelasten dazu führen, dass sich die Dachanker soweit verformen, dass der jeweils unter dem Dachanker liegende Dachziegel bricht, was dann im ungünstigsten Fall zu einem Feuchtigkeitseinbruch in das Dach führen kann.

Um dies zu vermeiden, müssen relativ komplizierte Maßnahmen getroffen, zusätzliche Blechziegel vorgesehen oder andere Schritte unternommen werden, ohne das wirklich zuverlässig Abhilfe geschaffen werden kann. Aufgrund der statischen Anforderungen und der Gefahr des Dachziegelbruchs muss die Anzahl der verwendeten Dachanker sehr hoch gewählt werden, was die Kosten erhöht.

Selbst mit den bekannten zusätzlichen Blechpfannen kann es zu Undichtigkeiten kommen, da beim Einsacken derartiger Blechziegel aufgrund der hohen Belastungen der Dachanker die Seitenteile der Blechziegel sich aufstellen können, so dass selbst bei nicht erfolgter Beschädigung es zu Regenwassereintritt kommen kann.

Als Verbesserung sind daher beispielsweise aus der DE 20 2006 001 782 U1 oder aus der DE 10 2005 059 487 A1 Befestigungsanordnungen bekannt, bei denen ein Dachziegel oder eine Dachpfanne komplett herausgenommen wird und durch einen Kunststoffziegel oder ein anderes montageplattenartiges Ersatzelement eingesetzt wird. Dieses Ersatzelement muss zum jeweils sonst verwendeten Ziegeltyp passen und daher in verschiedenen Sorten und Größen angeboten werden. Es wird mittels relativ großer Stockschrauben durchbohrt.

Hierzu bohrt der Handwerker durch den Ziegel von oben mit einem speziellen Bohrer in die Sparren hinein und setzt dann die Stockschrauben. Der Vorteil dieser Konstruktionen liegt darin, dass keine kompliziert geführten Durchgänge zwischen mehreren Dachpfannen oder anderen Dacheindeckungselementen hindurch gewählt werden müssen und auf diese Weise die Last direkt in die Sparren geführt werden kann.

Nachteilig ist jedoch weiterhin, dass der Sitz dieser Stockschrauben kaum zu kontrollieren ist, obwohl an ihnen nun bei derartigen Konstruktionen die gesamte Last nebst Fotovoltaikelementen oder Solarkollektoren hängt. Zwischen den Dachersatzelementen und den Dachunterkonstruktionselementen wie etwa dem Sparren entsteht ein relativ großer Hohlraum, durch den die Stockschrauben ragen, damit die Ersatzelemente seitlich an die benachbarten Dachpfannen angelegt werden können. Das Ersatzelement stützt sich also an benachbarten Dachpfannen ab und überträgt auf diese unverändert Kräfte, insbesondere dann, wenn die Stockschrauben nicht optimal und lotrecht sitzen.

Auch bei dieser Kraftübertragung kann es zu Schäden an den benachbarten Dacheindeckungselementen kommen, gerade unter Berücksichtigung der wechselnden und gegebenenfalls sehr hohen Lasten, die auf dem Ersatzelement ruhen beziehungsweise sich auf diesem abstützen.

Selbst dann, wenn man nun versucht, über eine Art Schienensystem mehrere derartige Stockschrauben oder Ersatzelemente miteinander zu verbinden, entstehen Zug- oder Druckspannungen, deren Größe und deren Richtung darüber hinaus kaum vorhergesehen werden kann und die damit unberechenbare Belastungen einerseits in die Halterung selbst und andererseits in die benachbarten Dacheindeckungselemente einleiten. Die auftretenden Gewichtslasten können auf Grund der großen Hebelarme auch deutliche Verformungen bewirken.

Das führt dazu, dass die eigentlich gewünschte und angestrebte statische Festigkeit der Gesamtkonzeption nur bedingt gegeben ist. Eine optimale Ausnutzung der gegebenen Möglichkeiten lässt sich zwar rechnerisch annähern, in der Praxis dann aber schwerlich ausführen, da handwerklich große Schwankungsbreiten entstehen und auch die Toleranzen der nicht zu beeinflussenden Dachunterkonstruktionselemente nicht berücksichtigt werden können.

Es gibt daher sogar Systeme, in denen Stockschrauben verwendet werden, die kurzerhand direkt durch den alten Ziegel, also das vorhandene Dacheindeckungselement, gebohrt werden. Dies ist für die Struktur der Dacheindeckungselemente natürlich besonders gefährlich.

Vorschläge wie etwa aus der DE 198 42 997 A1 oder der DE 20 2006 008 867 U1 beschäftigen sich mit der Montage von Zusatzelementen auf Dächern, die nur mit ebenen Blecheindeckungen abgedeckt sind und berücksichtigen daher keine Dacheindeckungselemente beziehungsweise schlagen vor, etwa oberhalb der ebenen, meist bahnartigen Blecheindeckung vorhandene Elemente zu durchbohren. Dadurch werden diese Dacheindeckungselemente wie etwa Dachziegel jedoch zerstört beziehungsweise beschädigt und können ihrer Aufgabe nicht mehr nachkommen.

Wünschenswert wäre es, eine Halterungsanordnung für die Aufdachmontage von Elementen zu haben, die einen zuverlässigen Sitz hat und die Beschädigungsgefahr für alle, auch die benachbarten Dacheindeckungselemente weiter reduziert.

Diese Aufgabe wird erfindungsgemäß bei einer gattungsgemäßen Halterungsanordnung dadurch gelöst, dass das Ersatzelement aus einem Material besteht, das flexibel und regendicht ist, und dass das Ersatzelement folienartig ausgestaltet ist.

Die Erfindung hat eine Reihe von erheblichen Vorteilen. So gelingt es, die auftretenden statischen Lasten nicht in komplizierten Wegen mehrfach umgelenkt innerhalb der Gesamtkonstruktion herumzuführen, wo sie die oben diskutierten Beschädigungen hervorrufen können, sondern sie leitet sie stattdessen auf kürzestem Weg in die Dachunterkonstruktionselemente ein, also beispielsweise in einen Sparren. Der sogenannte Dachanker wird mittels der erfindungsgemäß vorgesehenen Befestigungselemente, also insbesondere von Schrauben, direkt und geradlinig in dem Sparren versenkt, wozu dieser vorgebohrt wird.

Besonders relevant ist natürlich, dass durch die erfindungsgemäße Konstruktion eine Beschädigung oder gar ein Bruch der Dacheindeckungselemente vollständig vermieden wird, da gar keine Kräfte mehr auf benachbarten Dacheindeckungselementen abgestützt werden müssen. Eine Berührung der benachbarten Dacheindeckungsflächen erfolgt nur noch durch die flexiblen Elemente, die keine relevanten Kräfte mehr einleiten.

Da außerdem alle Bauteile vorgefertigt werden können, sind keine komplizierten Maßnahmen vor Ort mehr erforderlich. Der in dieser Sache tätige Handwerker muss keine schwierigen Bohrungen mehr vornehmen oder mit unüblichen Schrauben arbeiten.

Bei der gesamten Montage hat der hier tätige Handwerker eine freie Sicht auf sämtliche Details, Strukturen und gegebenenfalls natürlich auch auf etwa vorhandene Fehler in den Dachunterkonstruktionselementen und kann diese berücksichtigen beziehungsweise nach Möglichkeiten suchen, diesen Fehlern auszuweichen. Zu denken ist etwa an Astlöcher im Holz eines Sparrens.

Darüber hinaus hat der Handwerker keine Probleme damit, einen möglichst lotsenkrechten Aufbau zu den Dachunterkonstruktionselementen anzustreben, da sich dieser lotsenkrechte Aufbau automatisch durch den konstruktiven Aufbau der Anordnung gemäß der Erfindung ergibt. Dadurch wird zum einen das angestrebte Ergebnis sichergestellt und zum anderen der bisher dazu erforderliche Aufwand zum Anstreben dieses Ergebnisses überflüssig.

Die erfindungsgemäße Konzeption ist außerdem praktisch universell einsetzbar. Durch die Auswahl unterschiedlich langer Schrauben oder Hülsen kann eine gewünschte Aufbauhöhe sehr einfach variiert werden, ohne in der Konzeption Unterschiede berücksichtigen zu müssen. Sehr unterschiedliche Ziegelformen und Ziegelgrößen lassen sich mit ein und derselben Folie als flexibles Element überdecken.

Etwaige Überhänge des flexiblen Elementes können jeweils abgeschnitten werden, wenn dies die Optik erfordert.

Auf Grund der besser berechenbaren und auch konzeptionell zuverlässigeren Aufbaukonstruktion ist es möglich, die Anzahl der Dachanker zu reduzieren. Natürlich geht dies nur dann, wenn auch das Dach und die Dachunterkonstruktionselemente ausreichend statische Reserven haben, was durch die erfindungsgemäße Anordnung nicht beeinflussbar ist. Wird eine reduzierte Anzahl an Dachankern mit einem etwas steiferen Schienensystem eingesetzt, kann es auch höheren Schneelasten widerstehen. Diese höhere Schneelast ergibt sich durch die größere Ausgangsfläche, für die jeder dann noch verbleibende Dachanker zuständig ist, der dann entsprechend mehr Gewichtslast aufnehmen muss.

Wenn sich bei einer solchen Situation der Sparren unter der Gewichtslast etwas absenkt, dann senken sich auch die Dacheindeckungselemente, also die Dachziegel an dieser Stelle entsprechend ab, wodurch der Abstand der Oberfläche eines Dachziegels zu den angrenzenden Dachziegeln erhalten bleibt.

Ein weiterer praktischer Vorteil entsteht durch die Konstruktion, da sich nämlich das System und die in ihm auftretenden Kräfte relativ einfach statisch nachweisen lassen. Es ist jeweils leicht zu erkennen, wo und in welche Richtung welche Kräfte wirken oder wirken können, wenn man rechnerisch bestimmte Schneelasten oder andere witterungsbedingte Anforderungen berücksichtigen möchte.

In bestimmten Ausführungsformen kann auch vorgesehen werden, dass die Grundplatte mit zwei Hülsen und/oder Bolzen oder auch mit einer noch größeren Anzahl installiert wird.

Ein weiterer Vorteil besteht darin, dass bei dem Aufbau der Halterungsanordnung für die Aufdachmontage es nicht mehr erforderlich ist, sich bei wellenförmig ausgebildeten Dacheindeckungselementen wie etwa Dachziegeln stets an das Wellental zu orientieren, um irgendwelche Haltewinkel um die Kanten dieser Dacheindeckungselemente herumzuführen.

Das erfindungsgemäß jetzt verwendete Dacheindeckungs-Ersatzelement wird vollständig von den jeweiligen statischen Problemen entkoppelt. Damit kann das gesamte System statisch eindeutig bestimmt werden.

In einer weiteren Ausführungsform kann vorgesehen werden, das Ersatzelement jeweils nach Bedarf an die jeweilige von oben durch rutschende Schneelast noch einmal durch untergeschobene Bleche anzupassen und zu verstärken.

Im Folgenden wird anhand der Zeichnung ein Ausführungsbeispiel der Erfindung näher erläutert. Es zeigen:
- **Figur 1**: eine perspektivische Ansicht eines Bereiches eines Daches;
- **Figur 2**: eine perspektivische schematische Darstellung eines Befesti- gungsmittels für eine erfindungsgemäße Halterungsanordnung;
- **Figur 3**: eine schematische Ansicht des Befestigungsmittels aus Figur 2 in einem Teilbereich des Daches aus Figur 1;
- **Figur 4**: eine schematische Darstellung eines Ersatzelementes für eine erfindungsgemäße Halterungsanordnung;
- **Figur 5**: eine Schnittansicht des Ersatzelementes aus Figur 4 im Zu- sammenwirken mit einem Befestigungsmittel aus Figur 2; und
- **Figur 6**: eine schematische Darstellung eines weiteren Elementes für eine erfindungsgemäße Halterungsanordnung.

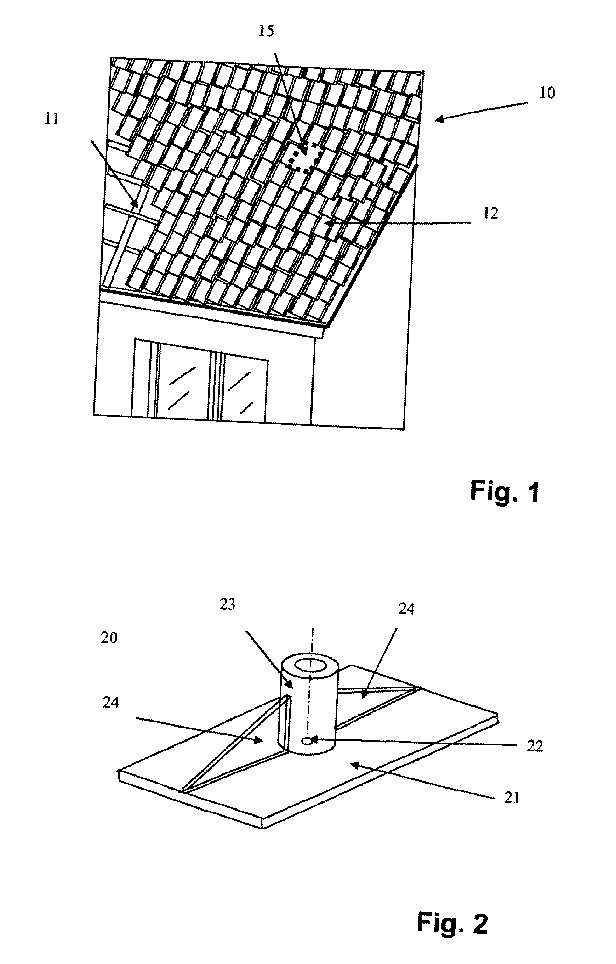

In der **Figur 1** blickt man auf ein rein schematisch dargestelltes Dach 10 eines nicht dargestellten Gebäudes. Das Dach 10 besitzt Dachunterkonstruktionselemente 11 in Form von Pfetten, Dachsparren und anderen Elementen, meist aus Holzbalken oder Holzplatten, die als tragende Teile dienen. Auf diese Dachunterkonstruktionselemente 11 sind Dacheindeckungselemente 12 in Form eines Verbundes aufgelegt. Diese Dacheindeckungselemente 12 sind insbesondere Dachziegel, die alle aufeinander abgestimmt sind und daher innerhalb eines Verbundes meist identisch sind. Natürlich ist es aber möglich, verschiedene Dächer auch mit jeweils gewünschten unterschiedlichen Dacheindeckungselementen 12 in unterschiedlicher Form, unterschiedlicher Größe und/oder unterschiedlicher Farbe einzudecken.

Häufig soll nun nachträglich auf einem mit Dacheindeckungselementen 12 eingedeckten Dach 10 ein weiteres Element 15 montiert werden, beispielsweise ein Solarkollektor für eine solarenergieunterstützte Heizungsanlage des Gebäudes unterhalb des Daches 10. Es kann sich auch um Fotovoltaikelemente oder andere zu montierende Elemente 15 handeln.

Um nun diese zusätzlichen Elemente 15 nachträglich auf dem Dach 10 montieren zu können, ist es insbesondere erforderlich, eine geeignete Befestigung oder Halterung dieser Elemente 15 an den tragenden Teilen des Daches 10 zu finden, also an den Dachunterkonstruktionselementen 11. Zwischen den Elementen 15 und diesen Dachunterkonstruktionselementen 11 befindet sich jedoch der Verbund aus Dacheindeckungselementen 12 in Form etwa der Dachziegel. Herkömmlich wird nun versucht, in irgendeiner Form einen mehrfach gebogenen Haken oder ein anderes Teil zwischen den Dacheindeckungselementen 12 in Form der Dachziegel hindurchzuführen und an den Dachunterkonstruktionselementen 11 in Form der Dachsparren zu befestigen. Es leuchtet ein, dass dabei sehr leicht die angrenzenden Dachziegel beschädigt werden können und dass es mit einer solchen Befestigung problematisch ist, wechselnde Belastungen und Kräfte bedingt etwa durch Schnee- und Windlasten geeignet in die Dachunterkonstruktionselemente 11 einzuleiten.

Die Erfindung arbeitet nun mit dem Gedanken, die entsprechende Befestigung oder Halterung nicht etwa zwischen vorhandenen oder wieder neu aufzudeckenden bisherigen Dacheindeckungselementen 12 hindurchzuführen, sondern aus dem Verbund der Dacheindeckungselemente 12 ein geeignetes komplett zu entfernen und zu ersetzen.

Dies ist in der Figur 1 angedeutet, indem ein Dachziegel aus dem Verbund der Dacheindeckungselemente 12 herausgenommen ist.

Die in den Figuren 2 bis 6 gezeigte Erfindung schafft nun nicht nur eine Möglichkeit, die Aufdachmontage des zu befestigenden Elementes 15, also etwa eines Solarkollektors, vorzunehmen, sondern auch den Verbund der Dacheindeckungselemente 12 in seiner Funktion nicht zu beeinträchtigen und die vorhanden bleibenden Dacheindeckungselemente 12 auch nicht zu beschädigen und somit etwa ihre Lebensdauer zu verkürzen.

**Figur 2** zeigt dabei ein Befestigungsmittel 20. Das Befestigungsmittel 20 weist eine Grundplatte 21 auf. Diese Grundplatte 21 besteht insbesondere aus Stahl oder einem anderen äußerst stabilen Material. Sie ist von der Fläche her kleiner als ein Dacheindeckungselement 12. Die Breite ist gleich oder geringer als die Breite üblicher Dachunterkonstruktionselemente 11, so dass die Grundplatte 21 schmaler ist als übliche Dachsparren. Sie kann auf solche Dachsparren flach aufgesetzt werden.

Die Grundplatte 21 kann mit Bohrungen versehen werden, mit der sie mittels entsprechender Stifte, Bolzen oder Schrauben bei der Montage auf den Dachunterkonstruktionselementen 11 befestigt werden kann. Dargestellt ist jedoch eine Ausführungsform ohne solche Bohrungen.

Die Grundplatte 21 besitzt darüber hinaus eine insbesondere mittig vorgesehene Öffnung 22. In der dargestellten Ausführungsform ist diese Öffnung 22 zugleich die zentrale Durchbohrung einer Hülse 23, deren Hülsenachse senkrecht zur Grundplatte 21 steht.

Diese Hülse 23 ist darüber hinaus mit Versteifungen 24 ausgestattet. Diese Versteifungen 24 gehen in der bevorzugten, dargestellten Ausführungsform in der Figur 2 von der mittig eingelassenen Hülse 23 in eine oder mehrere Richtungen und sind als Rippen ausgestaltet, die sich senkrecht von der Grundplatte 21 nach oben erstrecken. Die Versteifungen 24 besitzen bevorzugt darüber hinaus ein allseitiges Gefälle von der Hülse 23 aus.

Die Versteifungen 24 ebenso wie die Hülse 23 können an der Grundplatte 21 angeschweißt sein. Die Hülse 23 kann auch ein Innengewinde für einen noch im Folgenden beschriebenen Zweck aufweisen.

Anstelle der Hülse 23 mit dem Innengewinde ist auch ein Bolzen mit einem Außengewinde oberhalb der Versteifungen 24 denkbar.

Eine weitere Alternative wäre der Einsatz eines T-Profils als Befestigungsmittel 20. Bei diesem T-Profil würde der Querschenkel des T-Profils die Grundplatte 21 bilden, von der der Fußschenkel des T-Profils in Form der Versteifungen 24 aufragt, wobei eine Aufnahme für die Hülse 23 weggebrochen würde.

Insgesamt entsteht auf diese Weise eine Art Dachanker, der das Befestigungsmittel 20 bildet.

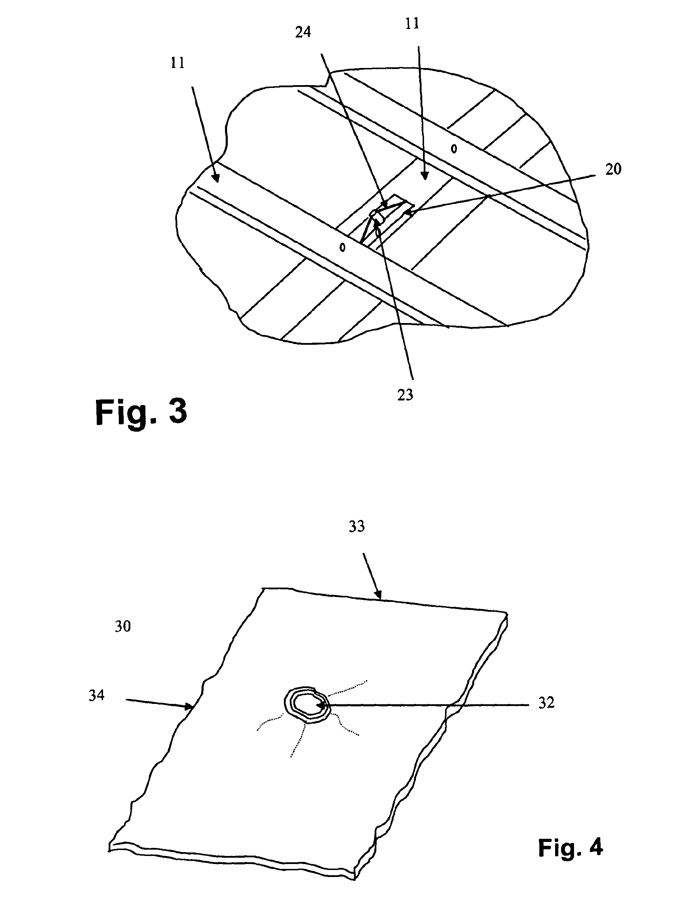

In der **Figur 3** ist zu erkennen, wie dieses Befestigungsmittel 20 mit der Grundplatte 21, der Hülse 23 und den Versteifungen 24 auf einem Dachsparren der Dachunterkonstruktionselemente 11 aufgesetzt ist. Zu erkennen ist auch eine Dachlatte, die senkrecht zu den Dachsparren verläuft.

In der **Figur 4** ist nun ein weiteres wesentliches Element der Erfindung dargestellt, nämlich ein Ersatzelement 30, das nach dem Einbau der erfindungsgemäßen Halterungsanordnung das in der Figur 1 herausgenommene Dacheindeckungselement 12 ersetzt und dessen Fläche von oben betrachtet (vergleiche Figur 1) einnimmt.

Das Ersatzelement 30 besteht aus einem flexiblen und regendichten Material. Es ist bevorzugt reißfest und kann Witterungsbelastungen widerstehen.

Es besitzt eine mittlere etwa kreisförmige, lochähnliche Öffnung 32 und im Wesentlichen senkrecht zueinander stehende Kanten 33 und 34, so dass es insgesamt etwa rechteckig aussieht. Die Dicke des folienartigen Ersatzelements 30 ist in etwa konstant. Das Ersatzelement 30 kann aus einer Bahn herausgeschnitten sein.

Die Öffnung 32 kann zusätzlich mit einer Verstärkung in Form einer Öse versehen sein. Dadurch wird ein Einreißen des folienartigen Ersatzelements aus Richtung der Öffnung 32 heraus vermieden.

Die flexible Folie des Ersatzelements 30 trägt in einer bevorzugten Ausführungsform an zwei Seitenkanten eine selbstklebende Beschichtung.

Betrachtet man nun wiederum die Figur 3, so wird jetzt nach dem Anbringen des Befestigungsmittels 20, also des Dachankers, auf den Dachunterkonstruktionselementen 11 das Ersatzelement 30 aufgelegt, und zwar so, dass die aufragende Hülse 23 durch die Durchführungsöffnung 32 hindurch tritt. Die Durchführungsöffnung 32 mit der sie verstärkenden und umgebenden Öse besitzt also Abmessungen, die genau zu der Hülse 23 passen und einen insbesondere wasserdichten Abschluss ermöglichen, was durch den erwähnten O-Ring zusätzlich vereinfacht und verbessert wird.

Das Ersatzelement 30 wird dann unter beziehungsweise über die angrenzenden Dacheindeckungselemente 12, also die Dachziegel in diesem Ausführungsbeispiel, gelegt und mit diesen über die selbstklebenden Beschichtungen verklebt.

Die Ausgestaltung der Versteifungen 24, die auch die Hülse 23 oder den ersatzweise eingesetzten Bolzen halten und stabilisieren, sorgen zugleich dafür, dass der Bereich der Durchführungsöffnung 32 der von den Versteifungen 24 zusätzlich abgestützten Fläche des Ersatzelementes 30 auch der höchste Punkt innerhalb einer neu gebildeten Zielfläche ist, so dass allseits von der Durchführungsöffnung 32 beziehungsweise der Öse und dem O-Ring ein Gefälle über eine gewisse Strecke nach außen abfällt und auf diese Weise Regenwasser sicher und zuverlässig abgeführt und von der Durchführungsöffnung 32 ferngehalten werden kann.

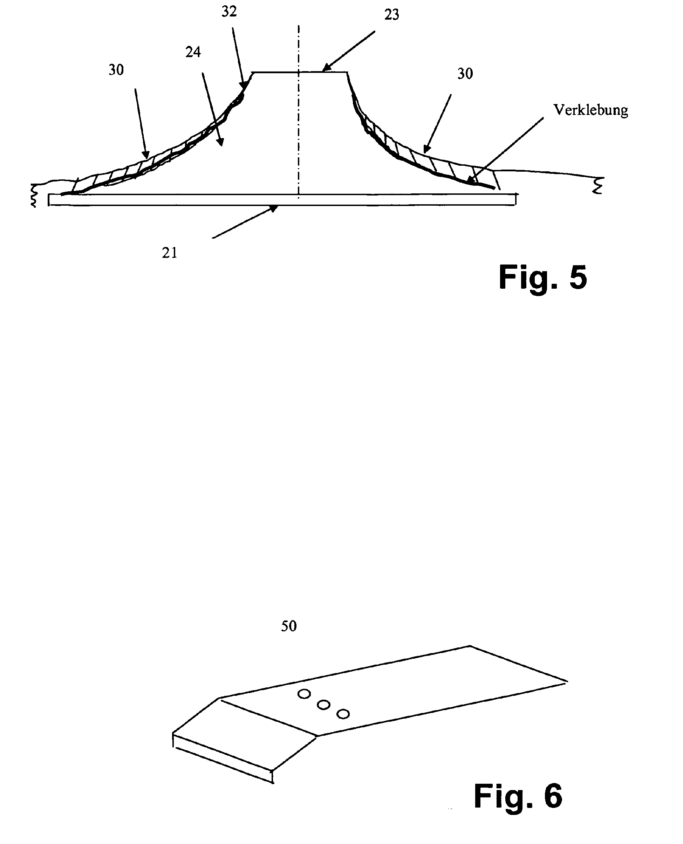

Dies ist auch in der **Figur 5** zusätzlich gut zu erkennen. Dort sieht man im Schnitt das Ersatzelement 30 mit der zentralen Durchführungsöffnung 32, die in diesem Schnitt deutlich durch eine angedeutete Versteifung 24 der darunter angeordneten Befestigungsmittel 20 nach oben gespannt wird.

Das flexible Material des Ersatzelementes 30 besteht vorzugsweise aus einem recycelbaren und ungiftigen Werkstoff. Hierzu können Kunststoffbahnen mit integrierten Aluminiumnetzen eingesetzt werden, alternativ sind jedoch auch andere Werkstoffe denkbar.

Auch die Öse und das flexible Material des Ersatzelementes 30 können miteinander verklebt sein, wie in der Figur 5 angedeutet ist.

In dieser Situation ragt nunmehr die Hülse 23 durch die Durchführungsöffnung 32 nach oben durch das Ersatzelement 30. Es bietet mit seinem Innengewinde beziehungsweise in einer anderen, oben erwähnten Ausführungsform mit einem Außengewinde nun eine gute Möglichkeit, um ein Verbindungsmittel 40 an dem Befestigungsmittel 20 anzuschrauben, wobei dieses Verbindungsmittel eine sehr stabile Schraube sein kann. Sie trägt ein Haltemittel 45. Dieses Haltemittel 45 muss keine Rücksicht mehr auf die Formgebung etwaiger Dacheindeckungselemente 12 nehmen muss, sondern kann rein an die Form des mit der Aufdachmontage anzubringenden Elementes 15 angepasst werden, um eine optimale Tragfähigkeit für dieses Element 15 bereitzustellen und die ausgeübten Kräfte und Belastungen über das Verbindungsmittel 40 ebenfalls optimal in die von dem Befestigungsmittel 20 aufragende Hülse 23 einzuleiten. Haltemittel 45 und Verbindungsmittel 40 können einstückig ausgeführt werden. Um den Einschraubvorgang in die Hülse 23 zu vereinfachen, werden sie jedoch bevorzugt zweistückig ausgestaltet.

Die Befestigung des Befestigungsmittels 20 mit der Grundplatte 21 erfolgt in einer bevorzugten Ausführungsform mittels vorbereiteter Bohrungen durch die Grundplatte 21, durch die die Befestigungsmittel (Schrauben, Nägel) hindurch geführt und in den Dachunterkonstruktionselementen 11, also insbesondere den Dachsparren, befestigt werden können.

Dies trennt die Befestigung der Grundplatte 21 an den Dachunterkonstruktionselementen 11 von der Befestigung der Elemente 15 an der Hülse 23, was die Berechenbarkeit der Gesamtkonstruktion verbessert und die Einleitung der Kräfte in das Dach 10 vergleichmäßigt und absichert.

Grundsätzlich wäre es jedoch auch möglich, dass Verbindungsmittel 40 durch die Hülse 23 hindurch auch durch die Grundplatte 21 bis in das darunter liegende Dachunterkonstruktionselement 11 einzuführen, wenn dies aus bestimmten Gründen gewünscht wird.

In der **Figur 6** wird noch eine zusätzliche Möglichkeit angegeben, die für eine weitere Vervielfachung der Möglichkeiten sorgt. So kann nämlich ein hier dargestelltes Verstärkungsmittel 50 eingesetzt werden, dass plattenähnlich oder auch entsprechend mehrfach geknickt vorbereitet und für verschiedene Anwendungsfälle in verschiedenen Stärken und Formen vorgesehen werden kann.

Dieses Verstärkungsmittel 50 wird unter das Ersatzelement 30 und über das Befestigungsmittel 20 angeordnet. Es wird also in der Situation der Figur 3 auf die Versteifungen 24 gelegt, bevor das Ersatzelement 30 dann über dieses Verstärkungsmittel 50 gelegt wird.

Dieses Verstärkungsmittel 50 aus der Figur 6 kann mehrfache Lochungen aufweisen, um zu berücksichtigen, dass die Dachunterkonstruktionselemente 11 (die Dachsparren) relativ zu den Dacheindeckungselementen 12 beziehungsweise im vorliegenden Falle zum Ersatzelement 30 nicht mittig, sondern eher am Rand liegen, so dass diese Verstärkungsmittel 50 eine zusätzliche Verstärkung auf der weiter von dem Dachunterkonstruktionselement 11 entfernt liegenden Seite des Ersatzelementes 30 bilden können.

Außerdem kann so auch durch die Stärke dieser Verstärkungsmittel 50 berücksichtigt werden, ob der Einsatz in einem schneereichen oder in einem schneearmen Gebiet erfolgt. Auf jeden Fall bewirkt das Verstärkungsmittel 50, dass das flexible Ersatzelement 30 nicht überbelastet wird.

Besonders deutlich wird in den Darstellungen der Figur 3 auch, dass die Montage stets zu einem lotsenkrechten Aufbau des Dachankers beziehungsweise der gesamten Halterungsanordnung relativ zum Dach führt.

Die Ersatzelemente 30 können entweder von vornherein auf eine bestimmte Form und Größe von Dacheindeckungselementen 12 zugeschnitten werden oder aber auch in hinreichender Größe für verschiedene Fälle zur Verfügung gestellt und dann an Ort und Stelle auf Pass angepasst und abgeschnitten werden.

### Bezugszeichenliste

- 10: Dach
- 11: Dachunterkonstruktionselemente
- 12: Dacheindeckungselemente
- 15: Element für die Aufdachmontage

- 20: Befestigungsmittel
- 21: Grundplatte
- 22: Öffnung
- 23: Hülse
- 24: Versteifung

- 30: Ersatzelement
- 32: Durchführungsöffnung
- 33: Seitenkante
- 34: Seitenkante

- 40: Verbindungsmittel
- 45: Haltemittel

- 50: Verstärkungsmittel

## Patentansprüche

1. Halterungsanordnung für eine Aufdachmontage von zu befestigenden Elementen (15) auf einem Dach (10), welches Dachunterkonstruktionselemente (11) aufweist und mit einem Verbund aus Dacheindeckungselementen (12) gedeckt ist,
mit einem Ersatzelement (30) für eines der Dacheindeckungselemente (12) des Verbundes, welches Ersatzelement (30) dafür ausgestaltet ist, anstelle eines der Dacheindeckungselemente (12) in den Verbund eingesetzt zu werden,
mit einer oder mehreren Durchführungsöffnungen (32) in dem Ersatzelement (30),
mit Befestigungsmitteln (20), die an den Dachunterkonstruktionselementen (11) befestigbar sind,
mit Verbindungsmitteln (40), die mit den Befestigungsmitteln (20) verbunden oder verbindbar sind und die durch die Durchführungsöffnungen (32) durchführbar sind, und
mit Haltemitteln (45) zum Halten der zu befestigenden Elemente (15) auf dem Dach (10),
wobei die Haltemittel (45) über die Verbindungsmittel (40) mit dem Befestigungsmittel (20) verbindbar sind, wobei
das Ersatzelement (30) aus einem Material besteht, das flexibel und regendicht ist, und das Ersatzelement (30) folienartig ausgestaltet ist.

2. Halterungsanordnung nach Anspruch 1,
**dadurch gekennzeichnet,**
**dass** das Ersatzelement (30) eine Öse besitzt, die die Durchführungsöffnung (32) verstärkt.

3. Halterungsanordnung nach Anspruch 1 oder 2,
**dadurch gekennzeichnet,**
**dass** die Durchführungsöffnung (32) von einem O-Ring umgeben ist.

4. Halterungsanordnung nach einem der vorstehenden Ansprüche,
**dadurch gekennzeichnet,**
**dass** das Befestigungsmittel (20) eine Platte (21) aufweist, die flach auf die Dachunterkonstruktionselemente (11) montierbar ist, und
**dass** von der Platte (21) Mittel (23, 24) aufragen, die durch die Durchführungsöffnung (32) in dem Ersatzelement (30) sich erstrecken und eine Verbindung mit den Verbindungsmitteln (40) ermöglichen.

5. Halterungsanordnung nach Anspruch 4,
**dadurch gekennzeichnet,**
**dass** von der Platte (21) eine Hülse (23) senkrecht aufragt und sich im montierten Zustand durch das Ersatzelement (30) nach oben erstreckt.

6. Halterungsanordnung nach Anspruch 5,
**dadurch gekennzeichnet,**
**dass** die Hülse (23) ein Gewinde zur Verbindung mit einem Gegengewinde der Verbindungsmittel (40) aufweist.

7. Halterungsanordnung nach Anspruch 5 oder 6,
**dadurch gekennzeichnet,**
**dass** sich von der Platte (21) des Befestigungsmittels (20) eine Versteifung (24) nach oben erstreckt, die eine Stabilisierung der Hülse (23) vornimmt.

8. Halterungsanordnung nach Anspruch 7,
**dadurch gekennzeichnet,**
**dass** die Versteifung (24) Rippen aufweist, die senkrecht von der Platte (21) aufragen und ein von der Hülse (23) nach außen abfallendes Gefälle aufweisen.

9. Halterungsanordnung nach einem der vorstehenden Ansprüche,
**dadurch gekennzeichnet,**
**dass** ein Verstärkungsmittel (50) vorgesehen ist, welches bei Bedarf das flexible Ersatzelement (30) unterstützt.

10. Halterungsanordnung nach Anspruch 9,
**dadurch gekennzeichnet,**
**dass** das Verstärkungsmittel (50) ein gelochtes Blech aufweist, welches zwischen das Befestigungsmittel (20) und das Ersatzelement (30) montierbar ist.

## Claims

1. Holding arrangement for a roof covering assembly of elements (15) to be fastened on a roof (10), which has lower roof construction elements (11) and is covered with a cluster made of roof covering elements (12), with a replacement element (30) for one of the roof covering elements (12) of the composite, which replacement element (30) is configured to be used in the cluster instead of one of the roof covering elements (12), with one or more through-openings (32) in the replacement element (30), with fastening means (20), which can be fastened on the lower roof construction elements (11), with connecting means (40) which are connected, or can be connected, to the fastening means (20) and which can be passed through the through-openings (32), and with holding means (45) for holding the elements (15) to be fastened on the roof (10), wherein the holding means (45) can be connected by the connecting means (40) to the fastening means (20), wherein the replacement element (30) consists of a material, which is flexible and rainproof, and the replacement element (30) is configured as a foil-like element.

2. Holding arrangement according to claim 1, **characterised in that** the replacement element (30) has an eyelet, which reinforces the through-opening (32).

3. Holding arrangement according to claim 1 or 2, **characterised in that** the through-opening (32) is surrounded by an O-ring.

4. Holding arrangement according to any one of the preceding claims, **characterised in that** the fastening means (20) has a plate (21), which can be assembled flat on the lower roof construction elements (11), and **in that** there rise from the plate (21) means (23, 24), which extend through the through-opening (32) in the replacement element (30) and allow a connection to the connecting means (40).

5. Holding arrangement according to claim 4, **characterised in that** a sleeve (23) rises perpendicularly from the plate (21) and, in the assembled state, extends upwardly through the replacement element (30).

6. Holding arrangement according to claim 5, **characterised in that** the sleeve (23) has a thread for connection to a counter-thread of the connecting means (40).

7. Holding arrangement according to claim 5 or 6, **characterised in that** a reinforcement (24), which carries out a stabilisation of the sleeve (23), extends upwardly from the plate (21) of the fastening means (20).

8. Holding arrangement according to claim 7, **characterised in that** the reinforcement (24) has ribs, which project perpendicularly from the plate (21) and have a slope slanting outwardly from the sleeve (23).

9. Holding arrangement according to any one of the preceding claims, **characterised in that** there is provided a reinforcement means (50), which supports the flexible replacement element (30) if necessary.

10. Holding arrangement according to claim 9, **characterised in that** the reinforcement means (50) has a perforated metal sheet, which can be mounted between the fastening means (20) and the replacement element (30).

## Revendications

1. Ensemble de maintien pour montage sur toit d'éléments (15) à fixer sur un toit (10) qui comporte des éléments de sous-construction de toit (11) et est couvert d'un assemblage d'éléments de recouvrement de toit (12), avec :
- un élément de remplacement (30) pour l'un des éléments de recouvrement de toit (12) de l'assemblage, lequel élément de remplacement (30) est réalisé pour être intégré à l'assemblage à la place de l'un des éléments de recouvrement de toit (12) ;
- une ou plusieurs ouvertures de passage (32) dans l'élément de remplacement (30) ;
- des moyens de fixation (20) qui peuvent être fixés aux éléments de sous-construction de toit (11) ;
- des moyens de liaison (40) qui sont ou peuvent être reliés aux moyens de fixation (20) et qui peuvent passer par les ouvertures de passage (32) ; et
- des moyens de retenue (45) pour retenir sur le toit (10) les éléments à fixer (15),
les moyens de retenue (45) pouvant être reliés au moyen de fixation (20) par l'intermédiaire des moyens de liaison (40),
l'élément de remplacement (30) étant composé d'une matière flexible et étanche à la pluie et
la réalisation de l'élément de remplacement (30) étant de type feuille.

2. Ensemble de maintien selon la revendication 1, **caractérisé en ce que** l'élément de remplacement (30) possède un oeillet qui renforce l'ouverture de passage (32).

3. Ensemble de maintien selon la revendication 1 ou 2, **caractérisé en ce que** l'ouverture de passage (32) est entourée d'un joint torique.

4. Ensemble de maintien selon l'une des revendications précédentes, **caractérisé en ce que** le moyen de fixation (20) comporte une plaque (21) qui peut être montée à plat sur les éléments de sous-construction de toit (11) et **en ce que** se dressent sur la plaque (21) des moyens (23, 24) qui s'étendent à travers l'ouverture de passage (32) dans l'élément de remplacement (30) et permettent une liaison avec les moyens de liaison (40).

5. Ensemble de maintien selon la revendication 4, **caractérisé en ce qu'**un manchon (23) se dresse verticalement à partir de la plaque (21) et, à l'état monté, s'étend vers le haut en passant par l'élément de remplacement (30).

6. Ensemble de maintien selon la revendication 5, **caractérisé en ce que** le manchon (23) présente un filetage pour liaison avec un contre-filetage des moyens de liaison (40).

7. Ensemble de maintien selon la revendication 5 ou 6, **caractérisé en ce qu'**un élément de rigidification (24) qui réalise une stabilisation du manchon (23) s'étend vers le haut à partir de la plaque (21) du moyen de fixation (20).

8. Ensemble de maintien selon la revendication 7, **caractérisé en ce que** l'élément de rigidification (24) présente des nervures qui se dressent verticalement à partir de la plaque (21) et présentent une déclivité qui descend du manchon (23) vers l'extérieur.

9. Ensemble de maintien selon l'une des revendications précédentes, **caractérisé en ce qu'**est prévu un moyen de renforcement (50) qui supporte l'élément de remplacement flexible (30) si nécessaire.

10. Ensemble de maintien selon la revendication 9, **caractérisé en ce que** le moyen de renforcement (50) comporte une tôle percée qui peut être montée entre le moyen de fixation (20) et l'élément de remplacement (30).
